# FASCICULE DE BREVET EUROPEEN

(11) **EP 0 706 958 B1**
(45) Date de publication et mention de la délivrance du brevet: **29.07.1998**
(21) Numéro de dépôt: 95490030.4
(22) Date de dépôt: 03.10.1995
(51) Int. Cl.: B65G 3/02, B65G 69/18

(54) **Procédé de traitement des produits pulvérulents en vue de prévenir l'envol d'aérosols et installation de traitement en vue de la mise en oeuvre du procédé**
Verfahren zur Behandlung von pulverförmigem Material zur Vermeidung des Austretens von Aerosolen und Behandlungsvorrichtung zur Anwendung des Verfahrens
Method for the treatment of powdery material in order to prevent the escape of aerosols and treatment device for implementing the method

(30) Priorité: 10.10.1994 FR 9412315
(43) Date de publication de la demande: 17.04.1996
(73) Titulaire: SEMENT Sarl, 62100 Calais (FR)
(72) Inventeur: Delaine, Philippe, F-59380 Warhem (FR)
(74) Mandataire: Ecrepont, Robert

(56) Documents cités:
- PATENT ABSTRACTS OF JAPAN vol. 8 no. 152 (M-309) [1589] ,14 Juillet 1984 & JP-A-59 048315 (HITACHI SEIAKUSHO K.K.)
- PATENT ABSTRACTS OF JAPAN vol. 8 no. 146 (M-307) [1584] ,7 Juillet 1984 & JP-A-59 043709 (SHIN NIPPON SEITETSU K.K.)
- PATENT ABSTRACTS OF JAPAN vol. 8 no. 240 (M-336) [1677] ,6 Novembre 1984 & JP-A-59 118605 (HITACHI SEISAKUSHO K.K.)
- PATENT ABSTRACTS OF JAPAN vol. 8 no. 146 (M-307) [1583] ,7 Juillet 1984 & JP-A-59 043707 (SHIN NIPPON SEITETESU K.K.)

## Description

L'invention se rapporte à un procédé de traitement des produits pulvérulents en vue de prévenir l'envol d'aérosols.

Elle se rapporte également à l'installation de traitement en vue de la mise en oeuvre du procédé.

Elle concerne notamment les produits pulvérulents qui, éventuellement mélangés à des produits de plus grosse granulométrie, sont entassés sur des aires de stockage.

L'envol des poussières des produits pulvérulents ainsi entassés sur les aires de stockage est un facteur non négligeable de la pollution, notamment, atmosphérique.

On constate que, selon les produits, la force du vent et les manipulations des produits pour constituer les tas ou y prélever de la matière, l'envol peut provoquer la perte de 1 à 2 % de la masse de produit ce qui, pour un minéralier de 100000 tonnes représente donc de 1000 tonnes à 2000 tonnes de matière qui vont ainsi être perdues et qui, après avoir été mises en suspension dans l'air, vont, en grande partie, se redéposer dans une zone périphérique à l'aire de stockage.

Pour ces raisons, les responsables de ces aires de stockage cherchent depuis longtemps à limiter ces envols.

Pour les envols qui auraient lieu lors des opérations de manutention en vue du déchargement des conteneurs, tels les bateaux, il est connu de disposer des capots et/ou d'arroser, au moins localement, les moyens de transport.

Mais, lorsque le tas se constitue ou, ensuite, pendant la période de stockage, pour éviter ces envols sous l'action principalement du vent, rien d'efficace n'est fait à ce jour.

Cela est lié à la hauteur des tas qui atteignent généralement environ 15 mètres et à leur grande emprise au sol qui peut dépasser 50 mètres de diamètre.

Sauf à prévoir des moyens surplombant la totalité de la zone de stockage, lesquels entraineraient des investissements disproportionnés par rapport au coût des matières stockées, il est donc difficile de protéger toute la surface du tas.

Pour suppléer à l'absence de moyen de protection, des essais de traitement ont été réalisés tout d'abord avec de l'eau qui, projetée par des lances à incendie ou moyens similaires (JP-A-59-43 707) sur le tas, humidifie la matière pour qu'elle fasse masse.

La quantité d'eau par unité de surface est variable et, par exemple, on augmente la quantité d'eau en se rapprochant du sommet (JP-A-59 048 315).

Malheureusement, les jets ravinent les tas et, lorsque l'eau est évaporée, il faut recommencer.

En outre, l'eau qui, gravitairement, circule dans le tas entraine avec elle les fines particules, ce qui vient modifier la répartition granulométrique de la matière entraînant vers le sol lesdites fines particules où la circulation favorisera l'envol.

On connaît un procédé de traitement (FR 2.641.206) selon lequel, au lieu de l'eau on fait appel à un mélange d'eau et de matière organique, telle une vinasse qu'on projette au mélange aux produits pulvérulents.

Ce mélange aurait pour effet de mieux fixer les poussières, notamment, de charbon.

Dans l'hypothèse de la projection, aucune indication n'est fournie quant à la manière de procéder et il est probable que le tas subisse, de ce fait, la même ségrégation qu'avec l'eau.

En outre, les matières organiques mélangées profondément aux produits pulvérulents risquent d'en affecter les propriétés.

Dans les deux cas, les excès de liquides risquent, en outre, d'aller polluer la nappe phréatique.

Un des résultats que l'invention vise à obtenir est de prévenir les envols d'aérosol à partir des tas de matériaux pulvérulents qui remédie à ces inconvénients.

A cet effet, l'invention a pour objet un procédé de traitement selon le préambule de la revendication 1 CARACTERISE en ce qu'on pulvérise le liquide selon une direction sensiblement normale à la surface à traiter et de manière à ce que le liquide projeté ne pénètre que très superficiellement les produits.

L'invention sera bien comprise à l'aide de la description ci-après faite à titre d'exemple non limitatif en regard du dessin ci-annexé qui représente schématiquement :

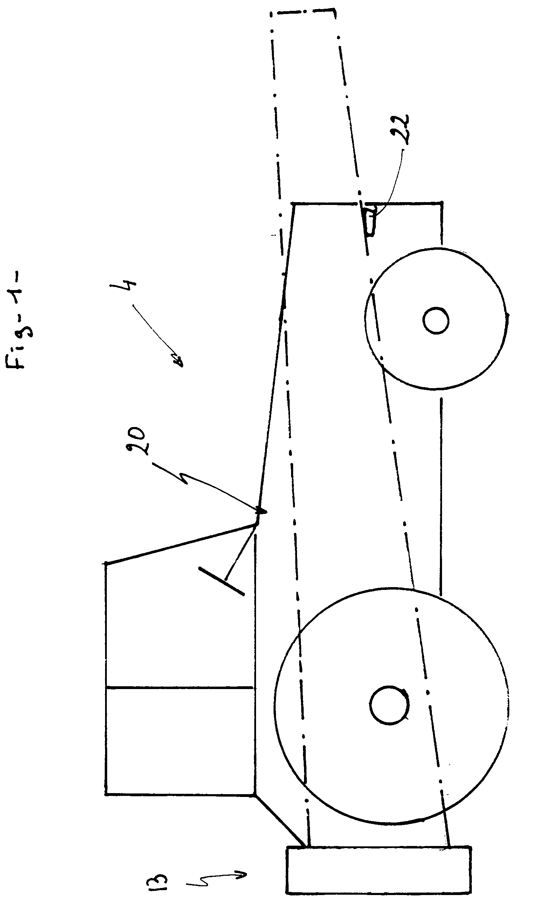

- figure 1 : une installation de traitement en vue de profil,

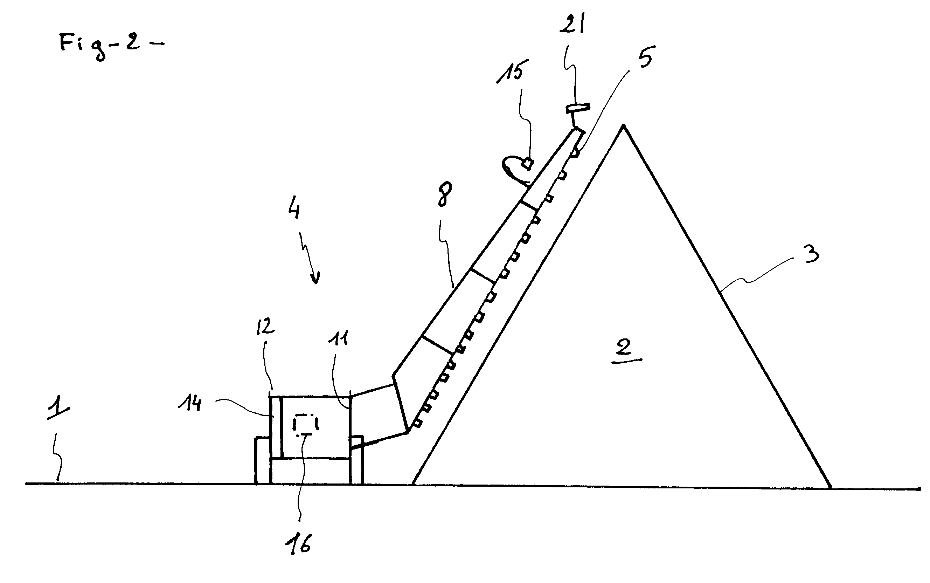

- figure 2 : une installation de traitement vue de face,

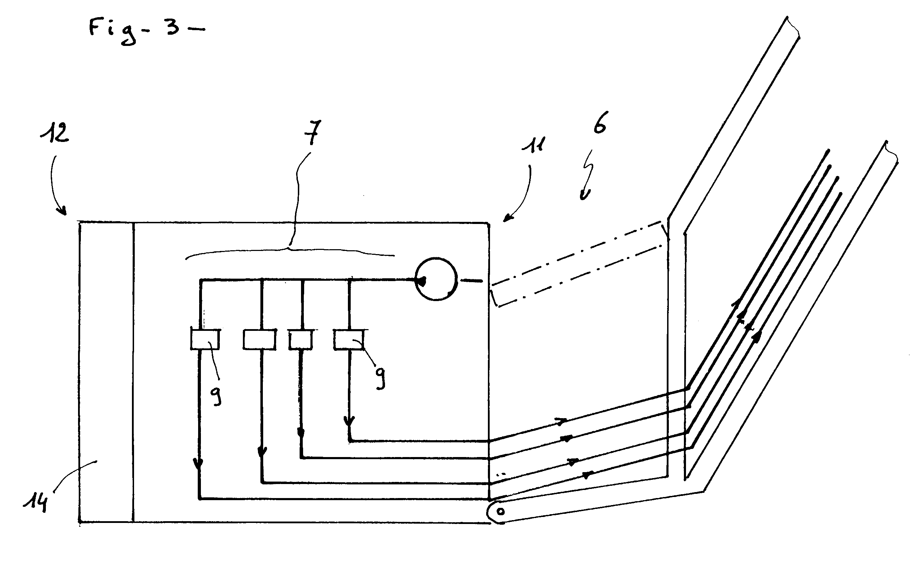

- figure 3 : un détail de cette installation.

En se reportant au dessin, on voit sur une aire 1 de stockage un tas 2 de matériau granuleux dont, en l'absence de traitement approprié, une fraction serait susceptible de s'envoler dans l'atmosphère sous l'effet du vent.

L'enveloppe externe du tas est définie par une génératrice 3 inclinée par rapport à l'horizontal et conférant au tas une forme généralement sensiblement conique.

De manière connue, pour limiter les envols, on fait appel à une installation 4 de projection mettant en oeuvre au moins un moyen 5 de projection et avec laquelle installation on projette un liquide sur les matériaux susceptibles de s'envoler.

De manière également connue, on fait varier la quantité de liquide projeté par unité de surface selon l'emplacement en hauteur de cette unité de surface sur le tas, de manière à obtenir une augmentation de la quantité de liquide projeté à l'unité de surface en se rapprochant du sommet du tas.

Selon une caractéristique essentielle de l'invention, on pulvérise le liquide selon une direction sensiblement normale à la surface à traiter et de manière à ce que le liquide projeté ne pénètre que très superficiellement les produits.

On règle la pression d'alimentation des buses de pulvérisation, la distance des buses par rapport à la surface à traiter et le débit par buse pour obtenir une projection du liquide suffisamment fine pour ne pas déplacer les grains du matériau avec une pénétration sur une épaisseur au plus de l'ordre de six à dix millimètres, de manière à réaliser une sorte de laquage superficiel du tas et ce, contrairement au résultat obtenu avec les procédés connus à ce jour, avec lesquels le liquide pénètre profondément et forme, après séchage, une croûte dont l'épaisseur est au moins d'environ le double de la valeur précitée.

La distance de pulvérisation est comprise entre vingt centimètres et un mètre et, de préférence, inférieure à soixante dix centimètres.

De préférence, on ajoute au liquide un produit fixateur.

Lorsque le tas de matière n'a jamais été traité et, lorsque celui-ci n'est pas encore stabilisé, c'est à dire a été formé il y a moins de 48 heures,
- on effectue un pré-traitement uniquement avec de l'eau et ensuite seulement,
- on effectue le traitement avec, pour liquide, de l'eau additionnée d'un produit fixateur en quantité prédéterminée.

Le délai entre le pré-traitement à l'eau et le traitement avec fixateur est d'une heure au minimum et, de préférence, deux heures.

L'augmentation du traitement pour la partie supérieure se justifie, car ce sont les sommets des tas de stockage qui sont les plus vulnérables à l'érosion éolienne.

L'orientation quasi perpendiculaire de la projection et sa faible distance de projection garantissent une répartition conforme au traitement souhaité.

Le fait de traiter superficiellement le tas par une fine pellicule minimise la quantité de produit et évite que la couche de matériau pouvant éventuellement subir des modifications dues au produit de traitement soit trop importante.

En arrosant les tas de manière non agressive, on ne modifie en aucune manière la répartition de la granulométrie et les particules fines ne viennent pas s'accumuler au bas des tas.

Le traitement est fait par temps sec.

Pour la mise en oeuvre du procédé, l'installation comprend des moyens 7 pour faire varier la quantité de liquide projeté par unité de surface selon l'emplacement de cette unité de surface avec un accroissement de la quantité de liquide en se rapprochant du sommet du tas.

Les moyens de projection sont constitués des buses de pulvérisation.

Cette installation comprend des moyens 6 pour orienter l'axe de projection de chaque buse de pulvérisation selon une direction sensiblement normale à la surface à traiter.

L'installation comprend une rampe 8 de pulvérisation pourvue, à intervalles réguliers, des buses 5 de pulvérisation qui, portée par un véhicule, comprend un moyen 6 en vue de lui donner une inclinaison par rapport à l'horizontale, laquelle inclinaison est choisie pour être sensiblement identique à celle définie par la génératrice définissant la forme externe du tas à traiter.

Cette rampe est réalisée en plusieurs tronçons notamment repliables et, pour chaque tronçon, l'installation comprend un moyen 9 de réglage de la pression et du débit du liquide circulant dans le circuit d'alimentation des buses de pulvérisation équipant ledit tronçon.

Les buses sont, par exemple, disposées tous les 50 centimètres.

Le jet provenant de ces buses n'a pas de caractère agressif, ce qui évite notamment le phénomène de ruissellement et une pénétration en profondeur du liquide de traitement.

Par exemple, pour une rampe d'environ 25 mètres, elle sera divisée en 4 tronçons pourvus de moyens de régulation de pression distincts réglés, par exemple, pour une pression d'alimentation du tronçon le plus près du sol de 2 bars, pour le suivant de 2,5 bars, pour le troisième de 3 bars et le quatrième de 4 bars.

Les débits des buses peuvent, bien entendu, être différenciés, par exemple, selon qu'il s'agira d'un pré-traitement ou en fonction des conditions climatiques.

Par exemple, on pourra, selon le traitement, utiliser deux types de buses l'une assurant un débit de l'ordre de 1 litre par minute et l'autre de 4 litres par minute.

La rampe est supportée sur l'un 11 des deux cotés 11,12 du châssis 13 d'un véhicule et de l'autre coté 12 de ce châssis, on prévoit un contre poids 14, par exemple, de 1,5 T pour une rampe d'environ 380 kg.

Ce châssis est, par exemple, placé à l'arrière d'un tracteur agricole 20 qui, sur son train avant, porte un réservoir de grande capacité et, par exemple, de 2800 litres, dans lequel est stocké et prélevé le liquide utilisé pour le traitement.

Pour accroître encore la stabilité de l'engin, ses pneumatiques pourront, au lieu d'air, être remplis d'eau.

Afin de garantir la distance de pulvérisation précitée, avantageusement, la rampe est pourvue d'un moyen 15 de mesure de la distance qui sépare les buses de pulvérisation de la surface à traiter ainsi que de moyens 16 qui, en fonction de la distance mesurée, corrigent automatiquement, si besoin est, la distance pour obtenir la distance souhaitée.

Il pourra s'agir d'un radar monté, par exemple, au tiers de la longueur de la rampe à compter de son extrémité terminale.

Cela permet d'avertir le conducteur de l'engin d'une dérive et limite aussi le risque de collision de la rampe sur le tas.

Pour son inclinaison, la rampe qui se compose de profilés inférieur et supérieur associés par des entretoises sera articulée autour d'un axe parallèle à l'axe longitudinal du véhicule, par exemple, situé au niveau du profité inférieur mais également cet axe peut être situé au niveau du profilé supérieur.

Le moyen d'inclinaison peut être un vérin.

Dans une autre forme de réalisation, c'est le châssis qui peut pivoter autour d'un axe horizontal et parallèle à l'axe longitudinal de l'engin.

Avant d'effectuer le traitement, on vérifie que la vitesse du vent est inférieure à environ 40 kilomètres/heure, puis on incline la rampe selon l'orientation définie par la forme du tas, on se place à la distance correcte pour le traitement et après avoir commencé la pulvérisation, on se déplace autour du tas à traiter pour couvrir toute la surface.

Le produit de fixation que l'on peut employer se compose, par exemple, de polymères mélangées avec un hydrate de carbone et de la gomme, tel le produit qui est commercialisé sous la marque "fixfor" ou un produit comprenant du polyacrylamide anionique tel celui vendu sous la marque "soiltex".

D'autres produits peuvent être utilisés, notamment, en fonction du matériau composant le tas et/ou de sa granulométrie.

Ces produits permettent de fixer les envols pendant environ 3 mois sans intervention intermédiaire.

La proportion du produit fixateur mélangé avec l'eau dépend du produit, bien entendu, mais également des conditions climatiques, elle sera, par exemple, d'environ 2 % à 10 %

Bien entendu, en cas de conditions climatiques sévères, telles une grande tempête, il est conseillé de retraiter les tas après passage de celle-ci.

Avantageusement, on prévoit à l'extrémité de la rampe un moyen 21 d'arrosage ponctuel pour effectuer des traitements localisés.

En fonction de sa longueur, la rampe pourra être formée en plusieurs éléments repliables afin de faciliter notamment le transport sur route et le véhicule présentera un moyen d'appui 22 pour l'extrémité libre de la rampe repliée afin d'éviter de solliciter trop fortement l'articulation entre le châssis et la rampe.

## Revendications

1. Procédé de traitement des produits pulvérulents en tas en vue de prévenir l'envol d'aérosols, selon lequel procédé, on fait appel à une installation (4) de projection mettant en oeuvre au moins un moyen (5) de projection et avec laquelle installation, on projette un liquide sur les matériaux susceptibles de s'envoler, de manière à obtenir une augmentation de la quantité de liquide projeté à l'unité de surface en se rapprochant du sommet du tas,
ce procédé étant **caractérisé** en ce qu'on pulvérise le liquide selon une direction sensiblement normale à la surface à traiter et de manière à ce que le liquide projeté ne pénètre que très superficiellement les produits.

2. Procédé de traitement des produits pulvérulents en vue de prévenir l'envol d'aérosols selon la revendication 1 **caractérisé** en ce qu'on règle la pression d'alimentation des buses de projection, la distance des buses par rapport à la surface à traiter et le débit par buse pour obtenir une projection du liquide suffisamment fine pour ne pas déplacer les grains du matériau avec une pénétration sur une épaisseur au plus de l'ordre de six à dix millimètres de manière à réaliser une sorte de laquage superficiel du tas.

3. Procédé de traitement des produits pulvérulents en vue de prévenir l'envol d'aérosols selon la revendication 2 **caractérisé** en ce qu'on règle la distance de pulvérisation entre 20 centimètres et 1 mètre.

4. Procédé de traitement des produits pulvérulents en vue de prévenir l'envol d'aérosols selon l'une quelconque des revendications 1 à 3 **caractérisé** en ce que, lorsque le tas de matière n'a jamais été traité et, lorsque celui-ci n'est pas encore stabilisé, c'est à dire a été formé il y a moins de 48 heures :
- on effectue un pré-traitement uniquement avec de l'eau et ensuite seulement,
- on effectue le traitement avec, pour liquide, de l'eau additionnée d'un produit fixateur en quantité prédéterminée.

5. Installation pour la mise en oeuvre du procédé selon la revendication 1 comprenant au moins un moyen de projection **caractérisée** en ce qu'elle comprend :
- une rampe (8) de pulvérisation en plusieurs tronçons pourvue, à intervalles réguliers, de buses (5) de pulvérisation et, portée par un véhicule,
- un moyen (6) en vue de lui donner une inclinaison par rapport à l'horizontale, laquelle inclinaison est choisie pour être sensiblement identique à celle définie par la génératrice définissant la forme externe du tas à traiter de sorte que l'axe de projection de chaque buse de pulvérisation a une direction sensiblement normale à la surface à traiter et
- pour chaque tronçon, l'installation comprend, en outre, un moyen (9) de réglage de la pression et du débit du liquide circulant dans le circuit d'alimentation des buses de pulvérisation équipant ledit tronçon pour que le liquide projeté ne pénètre que très superficiellement les produits constituant le tas.

6. Installation pour la mise en oeuvre du procédé selon la revendication 5 **caractérisée** en ce que la rampe est supportée sur l'un (11) des deux cotés (11,12) du châssis (13) d'un véhicule et de l'autre coté (12) de ce châssis, est prévu un contre poids (14).

7. Installation pour la mise en oeuvre du procédé selon l'une des revendications 5 ou 6 **caractérisée** en ce que la rampe est pourvue d'un moyen (15) de mesure de la distance qui sépare les buses de pulvérisation de la surface à traiter ainsi que de moyens (16) qui, en fonction de la distance mesurée, corrigent automatiquement, si besoin est, la distance pour obtenir la distance souhaitée.

8. Installation pour la mise en oeuvre du procédé selon la revendication 7 **caractérisée** en ce que le moyen (15) de mesure de la distance est un radar monté au tiers de la longueur de la rampe à compter de son extrémité terminale.

## Claims

1. A process for the treatment of powdered substances in a pile with the aim of preventing the escape of aerosols, wherein a spraying installation (4) is used which comprises at least one spraying means (5) and by means of which a liquid is sprayed onto the materials liable to escape so as to obtain an increase in the quantity of liquid sprayed per unit area as the top of the pile is approached,
this process being characterised in that the liquid is sprayed in a direction substantially perpendicular to the surface to be treated and in such a manner that the sprayed liquid only penetrates the substances very superficially.

2. A process for the treatment of powdered substances with the aim of preventing the escape of aerosols according to claim 1, characterised in that the supply pressure of the spray nozzles, the distance of the nozzles from the surface to be treated and the output per nozzle are adjusted in order to obtain a sufficiently fine spray of liquid, so as not to displace the grains of the material, with a penetration over a thickness of at most around six to ten millimetres in order to produce a kind of superficial coating of the pile.

3. A process for the treatment of powdered substances with the aim of preventing the escape of aerosols according to claim 2, characterised in that the spraying distance is adjusted between 20 centimetres and 1 metre.

4. A process for the treatment of powdered substances with the aim of preventing the escape of aerosols according to any one of claims 1 to 3, characterised in that, when the pile of material has never been treated and when it has not yet stabilised, i.e. has been formed less than 48 hours previously:
- pretreatment is carried out using water only, and subsequently,
- the treatment is carried out using, for liquid, water to which a fixing agent has been added in a predetermined quantity.

5. An installation for carrying out the process according to claim 1, comprising at least one spraying means, characterised in that it comprises:
- a spraying ramp (8) divided into a plurality of sections, provided at regular intervals with spray nozzles (5) and carried by a vehicle,
- a means (6) for positioning the ramp (8) at an angle relative to the horizontal, the angle being selected so as to be substantially identical to that defined by the generatrix defining the external form of the pile to be treated, with the result that the spraying axis of each spray nozzle is arranged substantially perpendicularly to the surface to be treated, and
- for each section, the installation furthermore comprises a means (9) for adjusting the pressure and the output of the liquid flowing in the supply circuit of the spray nozzles with which the said section is provided, so that the sprayed liquid only penetrates very superficially the substances forming the pile.

6. An installation for carrying out the method according to claim 5, characterised in that the ramp is supported on one (11) of the two sides (11, 12) of the frame (13) of a vehicle, and a counterweight (14) is provided on the other side (12) of the said frame.

7. An installation for carrying out the method according to either one of claims 5 and 6, characterised in that the ramp is provided with a means (15) for measuring the distance separating the spray nozzles from the surface to be treated, and with means (16) which, as a function of the distance measured, if necessary automatically correct the distance in order to obtain the desired distance.

8. An installation for carrying out the method according to claim 7, characterised in that the means (15) for measuring the distance is radar mounted a third of the way along the length of the ramp starting from its terminal end.

## Patentansprüche

1. Verfahren zur Behandlung von pulverförmigem Schüttmaterial zur Vermeidung des Austretens von Aerosolen, bei welchem eine Strahlanlage (4) eingesetzt wird, die mit mindestens einer Strahleinrichtung (5) arbeitet und mit welcher eine Flüssigkeit auf die leicht flüchtigen Stoffe so gesprüht wird, daß eine um so stärkere Erhöhung der aufgesprühten Flüssigkeitsmenge pro Flächeneinheit erzielt wird, je näher an die Spitze des Schüttkegels herangearbeitet wird,
**dadurch gekennzeichnet,** daß die Flüssigkeit in einer im wesentlichen senkrechten Richtung auf die zu behandelnde Fläche in einer Weise gesprüht wird, daß die aufgesprühte Flüssigkeit nur sehr oberflächlich in die Produkte eindringt.

2. Verfahren zur Behandlung von pulverförmigem Schüttmaterial zur Vermeidung des Austretens von Aerosolen nach Anspruch 1, **dadurch gekennzeichnet,** daß der Zuführdruck in der Zuleitung zu den Sprühdüsen, der Düsenabstand bezüglich der zu behandelnden Fläche, und die Düsendurchflußmenge so geregelt werden, daß eine ausreichend feine Versprühung der Flüssigkeit erzielt wird, um die Materialkörner nicht zu verlagern, wobei ein Eindringen über eine Höchstdicke in der Größenordnung von sechs bis zehn Millimeter in der Form vorliegt, daß in gewisser Art der Schüttkegel zulackiert wird.

3. Verfahren zur Behandlung von pulverförmigem Schüttmaterial zur Vermeidung des Austretens von Aerosolen nach Anspruch 2, **dadurch gekennzeichnet,** daß der Sprühabstand auf eine Distanz von 20 Zentimetern bis zu 1 Meter eingeregelt wird.

4. Verfahren zur Behandlung von pulverförmigem Schüttmaterial zur Vermeidung des Austretens von Aerosolen nach einem der Ansprüche 1 bis 3, **dadurch gekennzeichnet,** daß in den Fällen, in denen das aufgeschüttete Material noch nie behandelt wurde und in denen es noch nicht stabilisiert ist, d.h. noch nicht mindestens 48 Stunden seit Aufschüttung vergangen sind:
- eine Vorbehandlung ausschließlich mit Wasser vorgenommen wird und erst dann
- die Behandlung mit Wasser als Flüssigkeit erfolgt, dem ein Fixativ in vorgegebener Menge zugesetzt wurde.

5. Anlage zur Durchführung des Verfahrens nach Anspruch 1, welche mindestens eine Sprüheinrichtung umfaßt, **dadurch gekennzeichnet,** daß sie folgendes aufweist:
- eine geneigte Sprühfläche (8) in mehreren Abschnitten, die in regelmäßigen Abständen mit Sprühdüsen (5) versehen und auf ein Fahrzeug aufgesetzt ist;
- eine Einrichtung (6) zur Herbeiführung einer Neigung gegenüber der Horizontalen, welche so gewährt ist, daß sie im wesentlichen mit der Neigung identisch ist, wie sie von der Mantelfläche definiert wird, welche die Außenform des zu behandelnden Schüttkegels begrenzt, so daß die Sprühachse jeder Sprühdüse in einer Richtung verläuft, die senkrecht auf der zu behandelnden Fläche steht, und
- des weiteren für jeden Abschnitt eine Einrichtung (9) zum Regeln des Drucks und der Durchflußmenge der im Zuführkreis zur Zuleitung zu den in dem Abschnitt vorgesehenen Sprühdüsen fließenden Flüssigkeit in der Weise, daß die aufgesprühte Flüssigkeit nur sehr oberflächlich in das den Schüttkegel bildende Material eindringt.

6. Anlage zur Durchführung des Verfahrens nach Anspruch 5, **dadurch gekennzeichnet,** daß die Schrägfläche auf einer (11) der beiden Seiten (11, 12) des Fahrgestells (13) eines Fahrzeugs abgestützt ist und auf der anderen Seite (12) dieses Fahrgestell ein Gegengewicht (14) vorgesehen ist.

7. Anlage zur Durchführung des Verfahrens nach einem der Ansprüche 5 oder 6 **dadurch gekennzeichnet,** daß die Schrägfläche eine Einrichtung (15) zum Messen des Abstands der Sprühdüsen von der zu behandelnden Oberfläche sowie eine Einrichtung (16) aufweist, die je nach dem gemessenen Abstand bei Bedarf den Abstand automatisch so korrigiert, daß der gewünschte Abstand erzielt wird.

8. Anlage zur Durchführung des Verfahrens nach Anspruch 7, **dadurch gekennzeichnet,** daß die Einrichtung (15) zum Messen des Abstands ein Radar ist, der im ersten Drittel der Länge der Schrägfläche ab deren Ende an der Spitze angebracht ist.
